## Europäisches Patentamt

## European Patent Office

## Office européen des brevets

(19)

(11) Veröffentlichungsnummer: **0 069 223**
**B1**

(12) # EUROPÄISCHE PATENTSCHRIFT

(45) Veröffentlichungstag der Patentschrift:
11.09.85

(51) Int. Cl.⁴: **F 16 B 7/08**

(21) Anmeldenummer: **82104342.9**

(22) Anmeldetag: **18.05.82**

(54) **Rohrschelle.**

(30) Priorität: **04.07.81 DE 3126488**

(43) Veröffentlichungstag der Anmeldung:
**12.01.83 Patentblatt 83/2**

(45) Bekanntmachung des Hinweises auf die Patenterteilung:
**11.09.85 Patentblatt 85/37**

(84) Benannte Vertragsstaaten:
**AT BE CH FR GB IT LI NL SE**

(56) Entgegenhaltungen:
**DE - A - 2 446 133**
**DE - A - 2 633 442**
**DE - B - 2 626 412**
**DE - C - 899 968**
**GB - A - 1 578 522**
**US - A - 3 186 574**
**US - A - 4 264 047**

(73) Patentinhaber: **Firma A. Raymond, Teichstrasse 57,
D-7850 Lörrach (DE)**

(72) Erfinder: **Pittion, Philippe, 16, avenue de Romans,
F-38360 Sassenage (FR)**
Erfinder: **Andre, Guy, 7, rue Jean-Jacques Rousseau,
F-38170 Seyssinet-Pariset (FR)**
Erfinder: **Soulllard, Gérald, 7, rue Jean-Jacques
Rousseau, F-38170 Seyssinet-Pariset (FR)**
Erfinder: **J'Espere, Jean-Louis, 7, rue de Jean-Jacques
Rousseau, F-38170 Seyssinet-Pariset (FR)**
Erfinder: **Houte, Bernard, 9, Allée des Arcelles,
F-38320 Eybens (FR)**

## Beschreibung

Die Erfindung betrifft eine Rohrschelle und geht aus von einer Rohrschelle aus elastischem Kunststoff, bestehend aus einem auf einem Untergrund verankerbaren unteren Schellenbügel sowie einem mit diesem über ein Filmscharnier schwenkbar verbundenen oberen Schellenbügel, wobei die beiden Bügel an ihren freien Enden mit mindestens zwei gegeneinander gerichteten, ineinander einrastbaren Haken formschlüssig verbindbar sind und wobei ferner am oberen Schellenbügel auf der Scharnierseite ein um das Scharnier kreisbogenförmig gekrümmtes Horn angesetzt ist, welches beim Schließen dieses Bügels in eine Aussparung am gegenüberliegenden Ende des unteren Bügels eingreift, wobei der äußere Bogen des Horns die Innenwand der Rohrschelle tangiert.

Bei einer bekannten Rohrschelle dieser Art (vgl. DE-OS 2 446 133 = FR-PS 2 247 925) sind am oberen Schellenbügel ein um das Scharnier gekrümmtes Horn und am unteren Schellenbügel eine entsprechende Aussparung vorgesehen. Diese haben die Aufgabe, an der Filmscharnierseite eine zusätzliche Verriegelung zu schaffen, und zwar um zu verhindern, daß die Schelle aufspringt, wenn das Filmscharnier durch Materialversprödung einmal bricht oder abreißt. Diese Art der Filmscharnier-Verriegelung hat sich jedoch für die Praxis nicht bewährt und zwar offenbar deshalb nicht, weil die zur Schellenmitte hinweisende Innenwand der Aussparung aus entformungstechnischen Gründen geradlinig ausgebildet sein muß. Dies hat wiederum zur Folge, daß das Horn seine Verriegelungsfunktion nur in begrenztem Maße erfüllen kann. Falls nämlich das Filmscharnier unerwartet reißen sollte, so werden die freiwerdenden Zugkräfte vom Horn übernommen und auf die anliegende Wand der Aussparung übertragen. Da das Horn jedoch mehr oder weniger flexibel ist, wird es sich dann zur geraden Wand hin aufbiegen und leicht über die gekrümmte Innenwand der Aussparung hinwegrutschen.

Aufgabe der Erfindung ist es daher, die Verriegelungsmittel am Filmscharnier so zu gestalten, daß der Verriegelungseffekt sichergestellt ist.

Diese Aufgabe wird nach der vorliegenden Erfindung dadurch gelöst, daß sich in jedem Randbereich der Bügel auf der Scharnierseite ein Horn bzw. eine Aussparung befindet, wobei die Form von Horn und Aussparung einander derart entsprechen, daß die Hörner die Aussparungen nahezu spielfrei ausfüllen.

Durch die Verlegung der Verriegelungshörner nach außen wird nicht nur die Entformung und damit die Herstellung vereinfacht, sondern es wird auch die Möglichkeit geschaffen, bei den Aussparungen die Innenwände konzentrisch mit geringem Abstand zu den Außenwänden der Hörner auszuformen. Dadurch sind die Hörner in den Aussparungen innen wie außen geführt und können sich beim Auftreten von starken Zugkräften nicht mehr nach außen biegen.

Weitere Merkmale der Erfindung und deren technische Vorteile ergeben sich auch aus der nachfolgenden Beschreibung verschiedener Ausführungsbeispiele in Verbindung mit den Unteransprüchen und der Zeichnung. Es zeigt

Fig. 1 eine Rohrschelle im aufgeklappten Zustand in Seitenansicht,

Fig. 2 eine Draufsicht hierzu,

Fig. 3 eine Rohrschelle im montierten Zustand,

Fig. 4 eine ähnliche Rohrschelle mit einer anderen Hornausführung im aufgeklappten Zustand,

Fig. 5 die gleiche Rohrschelle im zusammengeklappten Zustand,

Fig. 6 eine weitere Rohrschelle mit einer alternativen Hornausführung im aufgeklappten Zustand und

Fig. 7 die gleiche Rohrschelle im zusammengeklappten Zustand.

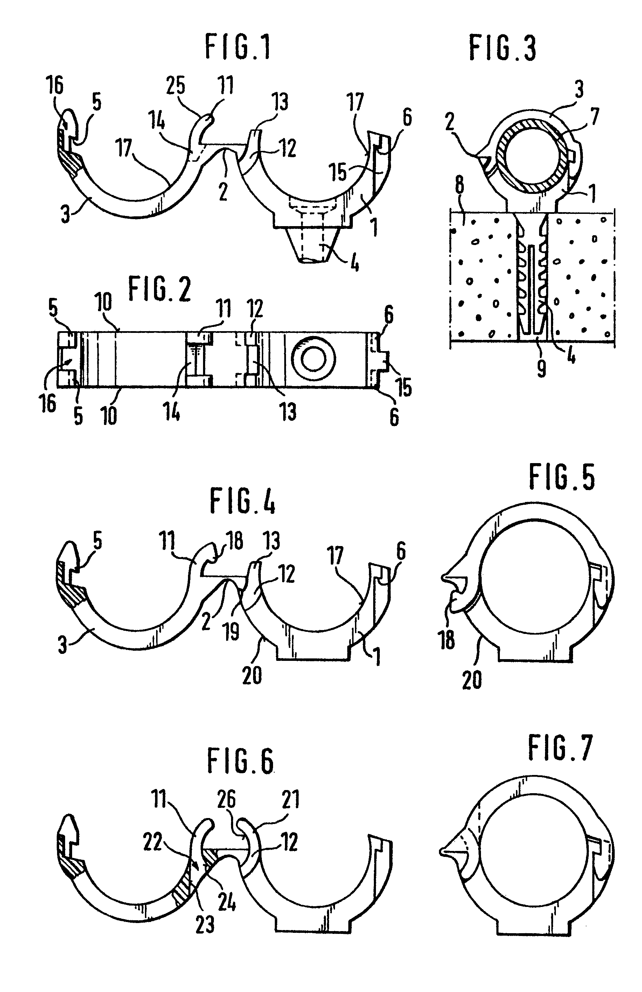

Die in den Fig. 1 und 2 im aufgeklappten Herstellungszustand dargestellte Rohrschelle besteht im wesentlichen aus einem unteren Schellenbügel 1 und einem oberen Schellenbügel 3, welcher mit dem unteren Schellenbügel 1 über ein sogenanntes Filmscharnier 2 schwenkbar verbunden ist. Am freien Ende des oberen, d. h. des in Fig. 1 links dargestellten Schellenbügels 3 ist ein Haken 5 angeformt, welcher in einen Gegenhaken 6 am freien Ende des unteren (= rechten) Schellenbügels 1 beim Zusammenklappen der Rohrschelle einrastet und beide Schellenenden formschlüssig miteinander verbindet (vgl. Fig. 3).

Die Schelle ist in erster Linie dazu bestimmt, Rohre 7 oder dergleichen langgestreckte Teile auf einem Untergrund 8, beispielsweise auf einer Stein- oder Betonwand zu verankern. Hierzu ist die Schelle mit einem in ein Loch 9 der Steinwand 8 einführbaren Befestigerfuß 4 versehen, welcher, wie im Ausführungsbeispiel angedeutet, als Spreizdübel oder dergleichen ausgebildet sein kann.

Am oberen Schellenbügel 3 sind an dessen Randbereichen 10 auf der Scharnierseite 2 sich nach innen erstreckende, kreisbogenförmig um das Scharnier 2 gekrümmte Hörner 11 angeformt, deren äußerer Bogen 25 tangential in die Innenwand 17 des oberen Bügels ausläuft. Am gegenüberliegenden Ende des unteren Bügels 1 sind ebenfalls an den Randbereichen 10 im gleichen Abstand vom Filmscharnier 2 und im gleichen Krümmungsradius wie bei den Hörnern 11 seitlich offene Aussparungen 12 vorgesehen, in welche die Hörner 11 beim Schließen des oberen Bügels 3 mit möglichst guter Raumausfüllung, d. h. nahezu spielfrei eingreifen (siehe Fig. 3). Hierdurch wird die Scharnierverbindung 2 zusätzlich verriegelt, so daß beim eventuellen Abreißen des Filmscharniers 2 die Schellenbügel 1 und 3 weiterhin verbunden bleiben.

Zwischen den Aussparungen 12 ist in Verlängerung der Innenwand 17 des unteren Bügels 1 ein kurzer Führungsnocken 13 angeformt, welcher in eine entsprechende Nische 14 im oberen Schellenbügel 3 beim Zusammenklappen der Schelle eintaucht. Ebenso ist am Einrastende des unteren Bügels 1 eine Führungsrippe 15 zwischen den Gegenhaken 6 vorgesehen, welche beim Zusammenführen der beiden Schellenhälften 1 und 3 in eine entsprechende Aussparung 16 zwischen den Haken 5 des oberen Bügels 3 eintaucht und die beiden Bügelenden auch in axialer Richtung zueinander festlegt.

Der Führungsnocken 13 ist genau wie die Innenwand 17 auf der gegenüberliegenden Seite ein kurzes Stück über das Halbrund des unteren Bügels 1 hochgeführt. Damit wird erreicht, daß das Rohr 7 nach dem Eindrücken in den unteren Schellenbügel 1 von der etwas verlängerten Innenwand 17 sowie dem Führungsnocken 13 festgehalten wird, bis der obere Schellenbügel 3 geschlossen ist. Durch die leichte Klemmwirkung des unteren Bügels 1 besteht für den Monteur die Möglichkeit, beim Setzen eines Rohres eine Vormontage durchzuführen.

Fig. 4 und 5 zeigt die gleiche Rohrschelle mit einer anderen Hornausführung. Die beiden Hörner 11 haben hier an ihren Enden zum Filmscharnier 2 hinweisende Rastnasen 18, während am inneren Bogen der Aussparung 12 entsprechende Rastflächen 19 vorgesehen sind, hinter denen die Rastnasen 18 beim Schließen des oberen Bügels 3 etwa gleichzeitig mit den Rasthaken 5 und 6 einschnappen. Hierdurch wird der Verriegelungseffekt noch verstärkt.

Die Aussparungen 12 sind hierbei etwas breiter als bei der Ausführungsform nach Fig. 1—3 und zwar gerade soviel, daß die Hörner 11 mit ihren vorstehenden Rastnasen 18 unter gleichzeitigem Auffedern der Aussparung 12 in diese eindringen können. Um die Schelle im Bedarfsfall wieder öffnen zu können, steht die Rastnase 18 im geschlossenen Zustand zweckmäßigerweise etwas über den Außenmantel 20 des unteren Schellenbügels 1 vor. Dadurch hat man zum Öffnen der Schelle einen Angriffspunkt, um die Rastnasen 18 von der Rastfläche 19 wegdrücken zu können. Wenn nun noch gleichzeitig der Haken 5 vom Gegenhaken 6 wegbewegt und der obere Schellenbügel 3 hochgedrückt wird, so läßt sich die Verriegelung am Filmscharnier 2 leicht wieder öffnen.

In Fig. 6 und 7 ist die gleiche Rohrschelle mit einer anderen Horn-Ausführung dargestellt. Hier ist zusätzlich zu den beiden seitlich angeordneten Hörnern 11 des oberen Bügels 3 am unteren Bügel 1 ein weiteres Horn 21 im gleichen Abstand vom Filmscharnier 2 vorgesehen, welches mit dem gleichen Krümmungsradius zum oberen Bügel 3 gerichtet ist. Dieses Horn 21 greift beim Schließen der Rohrschelle in eine zwischen den Hörnern 11 befindliche Aussparung 22 ein, von der die dem Scharnier 2 zugekehrte Innenwand 24 den gleichen Krümmungsradius aufweist wie der innere Bogen 26 des nach oben gerichteten Hornes 21. Die andere Innenwand 23 ist dagegen aus entformungstechnischen Gründen geradlinig ausgebildet.

## Patentansprüche

1. Rohrschelle aus elastischem Kunststoff, bestehend aus

— einem auf einem Untergrund (8) verankerbaren unteren Schellenbügel (1) sowie
— einem mit diesem über ein Filmscharnier (2) schwenkbar verbundenen oberen Schellenbügel (3), wobei
— die beiden Bügel (1 und 3) an ihren freien Enden mit mindestens zwei gegeneinander gerichteten, ineinander einrastbaren Haken (5, 6) formschlüssig verbindbar sind, und wobei ferner am oberen Schellenbügel (3) auf der Scharnierseite ein um das Scharnier (2) kreisbogenförmig gekrümmtes Horn (11) angesetzt ist, welches beim Schließen dieses Bügels (3) in eine Aussparung (12) am gegenüberliegenden Ende des unteren Bügels (1) eingreift, wobei der äußere Bogen (25) des Horns (11) die Innenwand (17) der Rohrschelle tangiert,

dadurch gekennzeichnet, daß sich in jedem Randbereich (10) der Bügel (1, 3) auf der Scharnierseite ein Horn (11) bzw. eine Aussparung (12) befindet, wobei die Form von Horn (11) und Aussparung (12) einander derart entsprechen, daß die Hörner (11) die Aussparungen (12) nahezu spielfrei ausfüllen.

2. Rohrschelle nach Anspruch 1, dadurch gekennzeichnet, daß die Hörner (11) an ihren Enden zum Filmscharnier (2) hinweisende Rastnasen (18) aufweisen, denen am Ende der Aussparungen (12) entsprechende Rastflächen (19) zugeordnet sind, wobei die Rastnasen (18) und Rastflächen (19) beim Schließen der Rohrschelle gleichzeitig mit den Rasthaken (5 und 6) in Eingriff kommen.

3. Rohrschelle nach Anspruch 2, dadurch gekennzeichnet, daß die Rastnasen (18) im eingerasteten Zustand über die Außenwand (20) des unteren Schellenbügels (1) vorstehen.

4. Rohrschelle nach Anspruch 1, dadurch gekennzeichnet, daß zusätzlich zu den beiden seitlichen Hörnern (11) des oberen Bügels (3) am unteren Bügel (1) ein zum oberen Bügel (3) gerichtetes Horn (21) mit gleichem Krümmungsradius vorgesehen ist, welches beim Schließen der Rohrschelle in eine zwischen den Hörnern (11) des oberen Bügels (3) befindliche Aussparung (22) eingreift, wobei die dem Scharnier (2) zugekehrte Innenwand (24) der Aussparung (22) den gleichen Krümmungsradius aufweist wie der innere Bogen (26) des nach oben gerichteten Hornes (21), während die andere Innenwand (23) der Aussparung geradlinig ausgebildet ist.

## Claims

1. A pipe clip of elastic plastics material, comprising:

— a lower curved clip portion (1) which can be anchored to a support (8), and

— an upper curved clip portion (3) which is pivotally connected to the lower clip portion (1) by way of a film hinge (2), wherein

— the two clip portions (1 and 3) can be positively connected at their free ends by at least two hooks (5, 6) which are directed oppositely to each other and which are engageable one into the other and wherein also provided on the upper clip portion (3) on the hinge side is a horn (11) which is curved in an arcuate configuration about the hinge (2) and which, when said clip portion (3) is closed, engages into a recess (12) at the opposite end of the lower clip portion (1), wherein the outer curve (25) of the horn (11) is tangential to the inner wall (17) of the pipe clip,

characterised in that a horn (11) and a recess (12) respectively are disposed in each edge region (10) of the clip portions (1, 3) on the hinge side, wherein the forms of the horn (11) and the recess (12) correspond to each other in such a way that the horns (11) fill the recesses (12) almost without clearance.

2. A pipe clip according to claim 1, characterised in that at their ends the horns (11) have latch projections (18) which point towards the film hinge (2), while associated with said latch projections (18) at the ends of the recesses (12) are corresponding latch surfaces (19), wherein, upon closure of the pipe clip, the latch projections (18) and the latch surfaces (19) come into engagement simultaneously with the latch hooks (5 and 6).

3. A pipe clip according to claim 2, characterised in that in the latched condition the latch projections (18) project beyond the outside wall (20) of the lower clip portion (1).

4. A pipe clip according to claim 1, characterised in that, in addition to the two lateral horns (11) of the upper clip portion (3), provided on the lower clip portion (1) is a horn (21) having the same radius of curvature, which is directed towards the upper clip portion (3) and which, upon closure of the pipe clip, engages into a recess (22) which is disposed between the horns (11) of the upper clip portion (3), wherein the inside wall (24), which is towards the hinge (2), of the recess (22) is of the same radius of curvature as the inner curve (26) of the upwardly directed horn (21) while the other inside wall (23) of the recess is of a straight configuration.

**Revendications**

1. Collier d'attache en matière plastique souple pour éléments tubulaires, se composant d'un étrier (1) constituant la partie inférieure du collier, pouvant se fixer par ancrage sur une base formant support (8), et d'un étrier (3) constituant la partie supérieure du collier, relié, dans des conditions lui permettant de pivoter, au précédent par l'intermédiaire d'une charnière à amincissement (2), les deux étriers (1 et 3) pouvant en l'occurrence être reliés l'un avec l'autre, au niveau de leur extrémité libre, au moyen d'au moins deux crochets (5, 6) disposés en opposition l'un par rapport à l'autre et conçus pour pouvoir s'imbriquer l'un dans l'autre, cette liaison s'obtenant par l'action mécanique résultant de leur forme, comportant en outre, au niveau de l'étrier (3) constituant la partie supérieure du collier, et disposé sur le côté charnière de l'ensemble, un ergot (11) épousant la charnière (2) en formant un arc de cercle, et qui, lorsque l'on ferme cet étrier (3) vient s'imbriquer dans un évidement (12) ménagé en correspondance dans l'extrémité opposée de l'étrier (1) constituant la partie inférieure du collier, le cintre extérieur (25) de l'ergot (11) ayant en l'occurence une disposition tangente par rapport à la paroi intérieure (17) du collier d'attache, se caractérisant par le fait qu'il existe au niveau du bord (10) de chaque étrier (1, 3), côté charnière de raccordement, un ergot (11) et un évidement (12), la forme de cet ergot (11) et de cet évidement (12) se correspondant de telle façon que les ergots (11) viennent remplir dans des conditions correspondant pratiquement à un ajustement glissant juste les évidements (12).

2. Collier d'attache pour éléments tubulaires suivant la revendication 1, se caractérisant par le fait que les ergots (11) comportent au niveau de leurs extrémités des tenons d'encliquetage (18) orientés vers la charnière à amincissement (2), auxquels correspondent des secteurs d'encliquetage (19) ménagés en correspondance à l'extrémité des évidements (12), les tenons d'encliquetage (18) et les secteurs d'encliquetage (19) venant et l'occurrence s'imbriquer l'un dans l'autre en même temps que les crochets d'encliquetage (5 et 6) lors de la fermeture du collier.

3. Collier d'attache pour éléments tubulaires suivant la revendication 2, se caractérisant par le fait que les tenons d'encliquetage (18) font saillie au-dessus de la paroi extérieure (20) de l'étrier (1) constituant la partie inférieure du collier, lorsqu'ils se trouvent dans leur position d'encastrement réciproque.

4. Collier d'attache pour éléments tubulaires suivant la revendication 1, se caractérisant par le fait qu'il est prévu, en plus des deux ergots latéraux (11) que comporte la partie supérieure du collier (3), sur l'étrier (1) constituant la partie inférieure du collier, un ergot (21) présentant un rayon de courbure identique, orienté en direction de l'étrier supérieur (3), qui, lors de la fermeture du collier, vient s'encastrer dans un évidement (22) qui se trouve ménagé entre les ergots (11) de l'étrier supérieur (3), la paroi intérieure (24) de l'évidement (22) faisant face à la charnière (2) présentant en l'occurrence le même rayon de courbure que le cintre intérieur (26) de l'ergot (21) orienté vers le haut, cependant que l'autre paroi intérieure (23) de l'évidement présente un tracé rectiligne.

FIG.1

FIG.3

FIG.2

FIG.4

FIG.5

FIG.6

FIG.7